# EUROPÄISCHE PATENTSCHRIFT

(11) **EP 3 656 208 B1**
(45) Veröffentlichungstag und Bekanntmachung des Hinweises auf die Patenterteilung: **07.04.2021**
(21) Anmeldenummer: 19210370.3
(22) Anmeldetag: 20.11.2019
(51) Int. Cl.: A01G 23/095, A01G 3/08, F16M 11/20

(54) **WERKZEUGARM FÜR ARBEITEN IN SCHWER ZUGÄNGLICHEN POSITIONEN**
TOOL ARM FOR WORK IN POORLY ACCESSIBLE POSITIONS
BRAS D'OUTIL PERMETTANT DE TRAVAILLER DANS DES POSITIONS DIFFICILEMENT ACCESSIBLES

(30) Priorität: 22.11.2018 AT 510272018
(43) Veröffentlichungstag der Anmeldung: 27.05.2020
(73) Patentinhaber: KNG-Kärnten Netz GmbH, 9020 Klagenfurt (AT)
(72) Erfinder: Breiml, Siegfried, 9560 Feldkirchen (AT)
(74) Vertreter: Wildhack & Jellinek

(56) Entgegenhaltungen:
- US-A1- 2008 196 790
- US-A1- 2015 082 762

## Beschreibung

Die Erfindung betrifft einen Werkzeugarm für Arbeiten in schwer zugänglichen Positionen gemäß dem Oberbegriff des Patentanspruchs 1.

Arbeiten in schwer zugänglichen Positionen sind zeit- und personalaufwändig und häufig anstrengend und gefährlich. Als Beispiel kann das Freihalten von Freileitungstrassen in bewaldetem Gebiet angeführt werden. Um einen sicheren Betrieb der Freileitungen zu gewährleisten, ist es notwendig, dass sich im Bereich der Freileitung keine Hindernisse befinden. Dazu sind Abstände definiert, die jedenfalls von Bewuchs freigehalten werden müssen. Äste, die seitlich in diesen Bereich ragen und den geforderten Mindestabstand zur Freileitung unterschreiten, müssen daher entfernt werden. Dies wird zusätzlich erschwert, wenn der Einsatzort in unebenem Gelände, beispielsweise im Gebirge, liegt.

Aus dem Stand der Technik sind verschiedene Werkzeugarme bekannt, die beispielsweise auf Trägerfahrzeuge montiert werden können, um an ihren Einsatzort gebracht zu werden. In schwerzugänglichem Gelände ist es jedoch nicht überall möglich, das Trägerfahrzeug optimal zu positionieren. Um das Werkzeug an die gewünschte Stelle zu bewegen, muss daher der Werkzeugarm entsprechend eingestellt werden. Bekannte Werkzeugarme weisen keine ausreichenden Einstellmöglichkeiten auf, bzw. die Zahl der Freiheitsgrade und die Beweglichkeit der bekannten Werkzeugarme ist zu gering, um den Einsatz in einem bewaldeten Hanggebiet zu ermöglichen. Bekannte Werkzeugarm weisen für den Einsatz in solchen Gebieten entweder keine ausreichende Reichweite auf, oder Gewicht und Größe erlauben keinen Einsatz im Gelände.
Beispielsweise zeigt EP 2 594 128 ein Fahrzeug mit einem Werkzeugarm mit Schneidemitteln, wobei der Werkzeugarm einen drehbaren ersten Armteil und einen senkrecht dazu ausgerichteten drehbaren zweiten Armteil aufweist.
EP 2 225 933 zeigt einen Werkzeugarm mit einer Schneidevorrichtung, wobei der Werkzeugarm einen ersten neigbaren Armteil und einen zweiten neigbaren Armteil aufweist, und auch die Schneidevorrichtung neigbar ist.
WO 2011/054060 zeigt einen Werkzeugarm mit einem ersten und einem zweiten Armteil, wobei die Armteile drehbar sind und die Neigung der Armteile einstellbar ist.
Diese Werkzeugarme weisen nur eine begrenzte Anzahl an Einstellmöglichkeiten auf.

Daher kommen in schwerzugänglichen Gebieten derzeit beispielsweise Helikopter mit Sägen zum Einsatz, die einen Zuschnitt aus der Luft durchführen. Diese Methode ist teuer und die exakte Steuerung schwierig.

Aufgabe der Erfindung ist es somit, einen Werkzeugarm bereitzustellen, der variabel einstellbar ist und insbesondere auch für den Einsatz an Orten mit Hindernissen oder in schwerzugänglichem Gelände geeignet ist.

Die Erfindung löst die Aufgabe mit dem kennzeichnenden Merkmal des Patentanspruchs 1. Die Erfindung betrifft einen Werkzeugarm für Arbeiten in schwer zugänglichen Positionen, wobei der Werkzeugarm ein proximales Ende aufweist, das auf einer Basis befestigbar ist, und ein distales Ende aufweist, das mit einem Werkzeug verbindbar ist. Der Werkzeugarm umfasst ein proximales erstes Armelement, das um eine erste Drehachse drehbar auf einem ersten Drehelement gelagert ist, und das in einer ersten Neigungsebene, insbesondere nach oben und unten, neigbar ist, wobei die erste Drehachse in der ersten Neigungsebene liegt. Weiters umfasst der Werkzeugarm ein, an das erste Armelement anschließendes, zweites Armelement, das um eine zweite Drehachse drehbar gelagert ist, und das in einer zweiten Neigungsebene neigbar ist. Erfindungsgemäß ist für einen solchen Werkzeugarm vorgesehen, dass zwischen dem ersten Armelement und dem zweiten Armelement ein Kippelement vorgesehen ist, wobei das Kippelement in einer Kippebene verkippbar ist, wobei die zweite Drehachse in der Kippebene liegt und wobei die zweite Neigungsebene senkrecht zur Kippebene angeordnet ist. Wenn das Kippelement nicht verkippt ist, liegt die zweite Drehachse auch in der zweiten Neigungsebene.

Durch das Kippelement kann der Werkzeugarm besonders variabel eingestellt werden und weist eine große Zahl an Freiheitsgraden auf. Für die Ausrichtung des Werkzeugarms kann das erste und zweite Armelement jeweils gedreht und geneigt werden und zusätzlich kann das zweite Armelement durch das Kippelement verkippt werden. Der Werkzeugarm kann dadurch auch bei einer nicht optimalen Positionierung der Basis so ausgerichtet werden, dass ein Werkzeug an der gewünschten Stelle angeordnet werden kann. Hindernissen kann also besser ausgewichen werden und auch eine Hangneigung kann besser ausgeglichen werden.

Vorteilhafte Ausgestaltungen ergeben sich durch die folgenden Merkmale:
Der Werkzeugarm ist besonders variabel einstellbar, wenn vorgesehen ist, dass die zweite Drehachse in einem Winkel zur Längserstreckung des ersten Armelements, ausgerichtet ist. Besonders vorteilhaft ist eine Ausrichtung senkrecht zum Armelement bzw. zur Verlängerung der Längsachse des Armelements. Der Werkzeugarm kann so besonders gut an die Gegebenheiten des Einsatzortes angepasst werden.

Weiters kann vorgesehen sein, dass das proximale Ende des zweiten Armelements von dem ersten Armelement und/oder einer Verlängerung der Längserstreckung des ersten Armelements, beabstandet ist, bzw. dass das proximale Ende des zweiten Armelements versetzt zur Längserstreckung oder einer Verlängerung der Längserstreckung des ersten Armelements angeordnet ist. Das erste und das zweite Armelement können daher besonders variabel zueinander ausgerichtet werden. Der Werkzeugarm weist dadurch eine hohe Zahl an Freiheitsgraden auf und ist variabel einstellbar.

Um den Werkzeugarm besonders einfach einstellen zu können, kann vorgesehen sein, dass am distalen Ende des ersten Armelements ein zweites Drehelement angeordnet ist, das die zweite Drehachse aufweist, wobei das Kippelement auf dem zweiten Drehelement angeordnet ist. Als Drehelement kann beispielsweise ein hydraulischer Drehteller oder ein über ein Schneckenrad angetriebener Zahnkranz verwendet werden.

Um die Steuerung des Werkzeugarms zu vereinfachen, kann vorgesehen sein, dass das erste Armelement durch eine erste Neigeeinheit, insbesondere umfassend einen ersten Hubzylinder, neigbar ist. Zusätzlich oder alternativ kann vorgesehen sein, dass das zweite Armelement durch eine zweite Neigeeinheit, insbesondere umfassend einen zweiten Hubzylinder, neigbar ist. Dies ermöglicht eine leichte und kompakte Bauweise des Werkzeugarms, die in schwer zugänglichem Gelände von Vorteil ist. Besonders vorteilhaft ist es, wenn die zweite Neigeeinheit auf dem Kippelement angeordnet ist. Dadurch werden eine kompakte Bauweise des Werkzeugarms und gleichzeitig eine große Variabilität der Einstellmöglichkeiten erreicht.

Konstruktiv vorteilhaft ist es, wenn auf dem zweiten Drehelement das Kippelement und auf dem Kippelement die zweite Neigeeinheit angeordnet ist. Das Kippelement ist dabei unmittelbar mit dem zweiten Drehelement und der zweiten Neigeeinheit verbunden, bzw. direkt zwischen dem zweiten Drehelement und der zweiten Neigeeinheit angeordnet. Auf diese Weise wird eine besonders kompakte Anordnung mit vielen Einstellungsmöglichkeiten erzielt. Weiters wird die Steuerung durch diese kompakte Bauweise vereinfacht.

Der Werkzeugarm kann besonders variabel eingestellt werden, wenn das Kippelement relativ zur zweiten Drehachse um einen Kippwinkel verkippbar ist, wobei die zweite Neigungsebene von der zweiten Drehachse im Kippwinkel geschnitten wird. Besonders vorteilhaft ist es, wenn der Kippwinkel zwischen -45° und +45° einstellbar ist. Bei einem Kippwinkel von 0° ist das Kippelement nicht verkippt und die zweite Drehachse liegt in der zweiten Neigungsebene. Durch den großen einstellbaren Bereich des Kippwinkels kann der Werkzeugarm besonders variabel eingestellt werden, sodass beispielsweise auch vermieden werden kann, dass die Basis häufig neu positioniert werden muss.

Um die Positionierung im Gelände zu vereinfachen und den Werkzeugarm stabilisieren zu können, kann vorgesehen sein, dass zumindest ein Greif-Stütz-Fuß am ersten Armelement vorgesehen ist, insbesondere am distalen Ende des ersten Armelements.

Zur Erhöhung der Reichweite des Werkzeugarms, kann vorgesehen sein, dass der Werkzeugarm ein, insbesondere distales, drittes Armelement umfasst, wobei das dritte Armelement durch eine dritte Neigeeinheit in einer dritten Neigungsebene neigbar ist. Die Steuerung des Werkzeugarms kann erleichtert werden, wenn dabei vorgesehen ist, dass die dritte Neigungsebene mit der zweiten Neigungsebene übereinstimmt.

Um den Werkzeugarm besonders variabel einstellen zu können, kann vorgesehen sein, dass das erste Armelement und/oder das zweite Armelement und/oder das dritte Armelement in der Länge veränderlich ist. Dadurch kann der Werkzeugarm besonders variabel ausgerichtet werden. Weiters ist es möglich, bei einer großen Reichweite eine geringe Lager- und Transportgröße zu erzielen. Zusätzlich oder alternativ kann vorgesehen sein, dass das erste Armelement und/oder das zweite Armelement und/oder das dritte Armelement als Teleskoparm ausgeführt ist, wobei ein isolierter Aufbau des Teleskoparms besonders vorteilhaft ist. Der Werkzeugarm kann dadurch bei großer Reichweite ein geringes Gewicht und hohe Stabilität aufweisen. Dadurch wird ein besonders einfacher Transport an den Einsatzort ermöglicht, insbesondere kann die Stabilität eines Transportfahrzeugs verbessert werden und auch schwer zugängliche Gebiete können erreicht werden.

Um den Werkzeugarm besonders einfach lagern oder transportieren zu können, kann vorgesehen sein, dass der Werkzeugarm zusammenlegbar ist, wobei das erste Armelement und/oder das zweite Armelement und/oder das dritte Armelement parallel zueinander anordenbar sind. Die Armelemente können insbesondere senkrecht zur ersten Drehachse und/oder senkrecht zur zweiten Drehachse, anordenbar sein. Es kann dabei insbesondere vorgesehen sein, dass das dritte Armelement zwischen dem ersten Armelement und dem zweiten Armelement anordenbar ist. Der Platzbedarf bei Lagerung und Transport des Werkzeugarms kann dadurch minimiert werden. Der Transport des Werkzeugarms wird somit erleichtert und auch ein Transport an schwer zugängliche Einsatzort wird ermöglicht.

Es kann vorgesehen sein, dass das Werkzeug über ein Distanzstück mit dem distalen Ende des Werkzeugsarms verbunden ist. Um eine Kollision des Werkzeugs mit dem Werkzeugarm zu vermeiden, kann vorgesehen sein, dass das Distanzstück, einen Versatz aufweist. Dadurch ist das Werkzeug nicht in einer direkten Verlängerung des dritten Armelements angeordnet, sondern versetzt dazu, also mit einem Abstand zu einer Verlängerung der Längsachse des dritten Armelements. Zusätzlich oder stattdessen kann vorgesehen sein, dass das Distanzstück, insbesondere über ein drittes Drehelement, drehbar mit dem Werkzeugarm verbunden ist. Dadurch wird die Bedienung des Werkzeugs deutlich vereinfacht und eine besonders genaue Steuerung kann erzielt werden.

Für den Einsatz ist es Werkzeugarms kann dieser mit einem Werkzeug verbunden sein. Es kann vorgesehen sein, dass das Werkzeug durch eine vierte Neigeeinheit neigbar ist, insbesondere mit einem Neigungswinkel von -45° bis +45° relativ zu einer Verlängerung der Längsachse des benachbarten Armelements, sodass das Werkzeug besonders einfach ausgerichtet werden kann und die Durchführung von Arbeiten mit dem Werkzeug erleichtert wird. Als vierte Neigeeinheit kann beispielsweise ein Hubzylinder vorgesehen sein. Zum Freihalten von Freileitungstrassen ist es besonders vorteilhaft, wenn das Werkzeug eine Astsäge ist. Die Astsäge kann beispielsweise zwei Sägeblätter aufweisen.

Um auch schwer zugängliche Einsatzorte zu erreichen, kann vorgesehen sein, dass die Basis ein Fahrzeug ist. Erfindungsgemäß ist daher auch ein Fahrzeug mit einem erfindungsgemäßen Werkzeugarm. Dabei ist es gerade in schwerzugänglichem Terrain besonders vorteilhaft, wenn das Fahrzeug ein Raupenfahrzeug ist. Als Fahrzeug ist beispielsweise eine Mähraupe geeignet. Dies ermöglicht eine einfache Freihaltung des Bodenbereichs, z.B. unter einer Freileitung, von Bewuchs.

Es kann dabei vorgesehen sein, dass der Werkzeugarm über eine Dreipunkthydraulik am Fahrzeug befestigbar ist. Der Werkzeugarm kann dadurch schnell und einfach auf das Fahrzeug montiert werden und vom Fahrzeug abgenommen werden, so dass ein bedarfsorientierter Einsatz ermöglicht wird. Die Dreipunkthydraulik bildet dabei die Schnittstelle zwischen Fahrzeug und Werkzeugarm und bildet somit die Basis für den Werkzeugarm. Die Dreipunkthydraulik weist zwei Unterlenker und einen Oberlenker auf und ermöglicht so die Befestigung am Fahrzeug an drei Punkten, wobei durch Anheben und Absenken der Unterlenker eine Höhenverstellbarkeit gegeben ist. Wenn vorgesehen ist, dass an der Dreipunkthydraulik zumindest ein Stützfuß, insbesondere zwei Stützfüße, angeordnet ist, wird eine zusätzliche Stabilisierung des Werkzeugarms ermöglicht.

Eine besonders vorteilhafte Ausführungsform der Erfindung ist anhand der folgenden Zeichnungen ohne Einschränkung des allgemeinen erfinderischen Gedankens beispielhaft dargestellt.
Fig. 1 zeigt einen erfindungsgemäßen Werkzeugarm aus seitlicher Ansicht.
Fig. 2 zeigt eine Detailansicht der Verbindung von erstem und zweitem Armelement.
Fig. 3 zeigt eine Detailansicht der Verbindung von erstem und zweitem Armelement, wobei das Kippelement verkippt ist.
Fig. 4 zeigt den Werkzeugarm aus Fig. 1, wobei das zweite und dritte Armelement vollständig ausgestreckt sind.
Fig. 5 zeigt den Werkzeugarm aus Fig. 1, wobei das dritte Armelement abgewinkelt ist.
Fig. 6 zeigt den Werkzeugarm aus Fig. 1, wobei das zweite Armelement geneigt und das dritte Armelement zusammengelegt dargestellt sind.
Fig. 7 zeigt den Werkzeugarm aus Fig. 1 vollständig zusammengelegt.
Fig. 8 zeigt den Werkzeugarm aus Fig. 1 zusammengelegt auf einem Fahrzeug befestigt.
Fig. 9 zeigt das Fahrzeug aus Fig. 8 aus einer Schrägansicht.
Fig. 10 zeigt das Fahrzeug aus Fig. 8 in einer Ansicht von hinten.
Fig. 11 zeigt schematisch mögliche Einstellungen des Kippelements.
Fig. 12 zeigt das Fahrzeug aus Fig. 8 beim Einsatz aus einer seitlichen Ansicht.
Fig. 13 zeigt die Anordnung aus Fig. 12 aus einer Ansicht von hinten.
Fig. 14 zeigt das Fahrzeug aus Fig. 8 beim Einsatz in einer Hanglage.

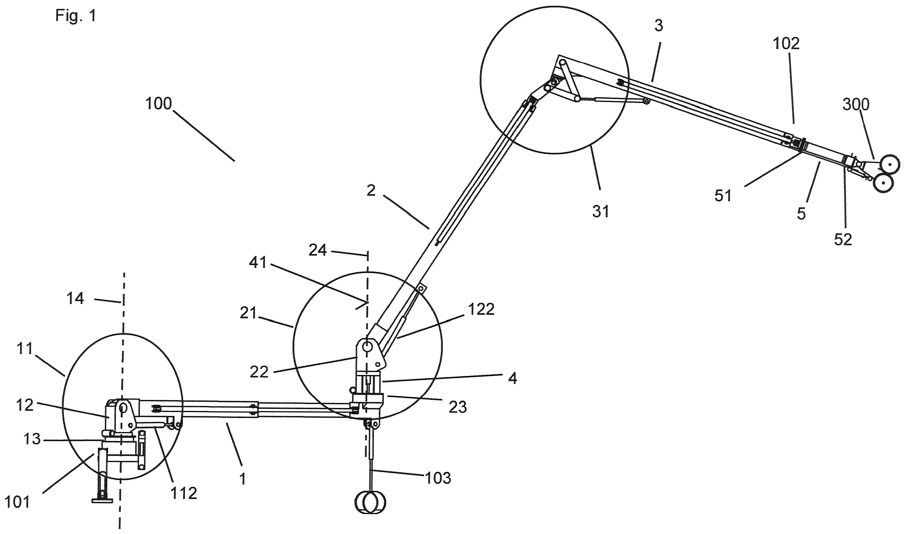

Fig. 1 zeigt einen erfindungsgemäßen Werkzeugarm 100. Der Werkzeugarm 100 weist ein proximales Ende 101 auf, wobei der Werkzeugarm 100 mit seinem proximalen Ende 101 auf einer Basis befestigbar ist. Der Werkzeugarm 100 weist zudem ein distales Ende 102 auf, das mit einem Werkzeug 300 verbunden ist. In der dargestellten Ausführungsform ist das Werkzeug 300 eine Astsäge. Zwischen dem distalen Ende 102 und dem Werkzeug 300 ist ein Distanzstück 5 angeordnet. In der dargestellten Ausführungsform umfasst der Werkzeugarm 100 ein proximales erstes Armelement 1, ein an das erste Armelement 1 anschließendes, zweites Armelement 2 sowie ein distales drittes Armelement 3. Am distalen Ende des ersten Armelements 1 sind Greif-Stütz-Füße 103 angeordnet, um den Werkzeugarm 100 stabilisieren zu können.

Das erste Armelement 1 ist auf einem ersten Drehelement 13 gelagert und um eine erste Drehachse 14 um 360° drehbar. In der dargestellten Ausführungsform ist das erste Drehelement 13 als hydraulischer Drehteller ausgebildet. In einer alternativen Ausführungsform könnte das erste Drehelement 13 beispielsweise auch ein über ein Schneckenrad angetriebener Zahnkranz sein.

Das erste Armelement 1 ist zudem in einer ersten Neigungsebene 11 neigbar, wobei das erste Armelement 1 in einer ersten Neigeeinheit 12 gehalten ist. Die Neigung ist über die erste Neigeeinheit 12 mit einem ersten Hubzylinder 112 nach oben und unten einstellbar, wobei die erste Drehachse 14 in der ersten Neigungsebene 11 liegt. Dadurch kann beispielsweise eine Hangneigung teilweise ausgeglichen werden.

Am distalen Ende des ersten Armelements 1 ist ein zweites Drehelement 23 angeordnet, das als hydraulischer Drehteller ausgebildet ist. Das zweite Drehelement 23 weist eine zweite Drehachse 24 auf, wobei die zweite Drehachse 24 senkrecht zum ersten Armelement 1 ausgerichtet ist. Das zweite Armelement 2 ist um die zweite Drehachse 24 um 360° drehbar gelagert. Das proximale Ende des zweiten Armelements 2 ist dabei von dem ersten Armelement 1 bzw. von einer Verlängerung der Längsachse des ersten Armelements 1 beabstandet. Das proximale Ende des zweiten Armelements 2 ist daher zum ersten Armelement 1 versetzt angeordnet. Das zweite Armelement 2 ist in einer zweiten Neigungsebene 21 neigbar, wobei dafür eine zweite Neigeeinheit 22 mit einem zweiten Hubzylinder 122 vorgesehen ist. In der dargestellten Ausführungsform ist das zweite Armelement 2, sowie der zweite Hubzylinder 122 in der Neigeeinheit 22 gehalten.

Zwischen dem ersten Armelement 1 und dem zweiten Armelement 2 ist ein Kippelement 4 vorgesehen. Das Kippelement 4 ist auf dem zweiten Drehelement 23 angeordnet, und die zweite Neigeeinheit 22 ist auf dem Kippelement 4 angeordnet. Das Kippelement 4 ist in einer Kippebene 41 verkippbar, wobei die zweite Drehachse 24 in der Kippebene 41 liegt. In der dargestellten Ausführungsform ist die Kippebene 41 senkrecht zur Bildebene ausgerichtet, sodass die zweite Drehachse 24 einem Schnitt durch die Kippebene 41 entspricht. Die zweite Neigungsebene 21 ist senkrecht zur Kippebene 41 angeordnet, sodass sie in der dargestellten Ausführungsform in Bildebene liegt. In der dargestellten Ausführungsform ist das Kippelement 4 nicht verkippt, d.h. das Kippelement 4 ist auf der zweiten Drehachse 24 angeordnet. Die zweite Drehachse 24 liegt daher auch in der zweiten Neigungsebene 21.

In der dargestellten Ausrichtung des Werkzeugarms 100 ist das zweite Armelement 2 nach oben geneigt. Am distalen Ende des zweiten Armelements 2 schließt sich das dritte Armelement 3 an. Das dritte Armelement 3 ist in einer dritten Neigungsebene 31 neigbar, die in der dargestellten Ausführungsform mit der zweiten Neigungsebene 21 übereinstimmt.

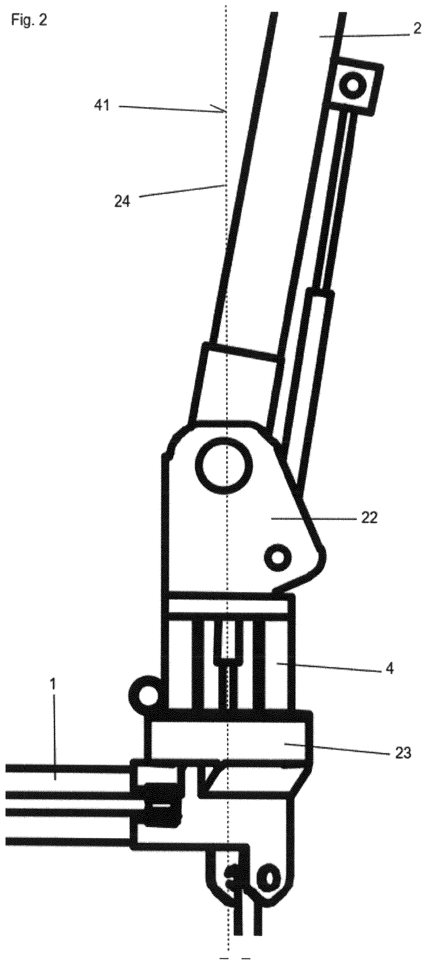

Fig. 2 zeigt eine Detailansicht der Verbindung des ersten Armelements 1 und des zweiten Armelements 2 mit der Ausrichtung aus Fig. 1. Am distalen Ende des ersten Armelements 1 ist das zweite Drehelement 23 angeordnet. Das Kippelement 4 ist direkt auf dem zweiten Drehelement 23 angeordnet und direkt auf dem Kippelement 4 ist die zweite Neigeeinheit 22 angeordnet. Das Kippelement 4 ist somit unmittelbar mit dem zweiten Drehelement 23 und der zweiten Neigeeinheit 22 verbunden. Durch diese Verbindung von erstem Armelement 1 und zweitem Armelement 2 ist das proximale Ende des zweiten Armelements 2 versetzt zum ersten Armelement 1 angeordnet, bzw. ist von diesem beabstandet. Der Abstand entspricht dabei der Höhe des Kippelements 4. Der von zweitem Drehelement 23, Kippelement 4 und zweiter Neigeeinheit 22 gebildete Bauteil weißt eine hohe Zahl an Einstellmöglichkeiten auf und ist besonders kompakt.

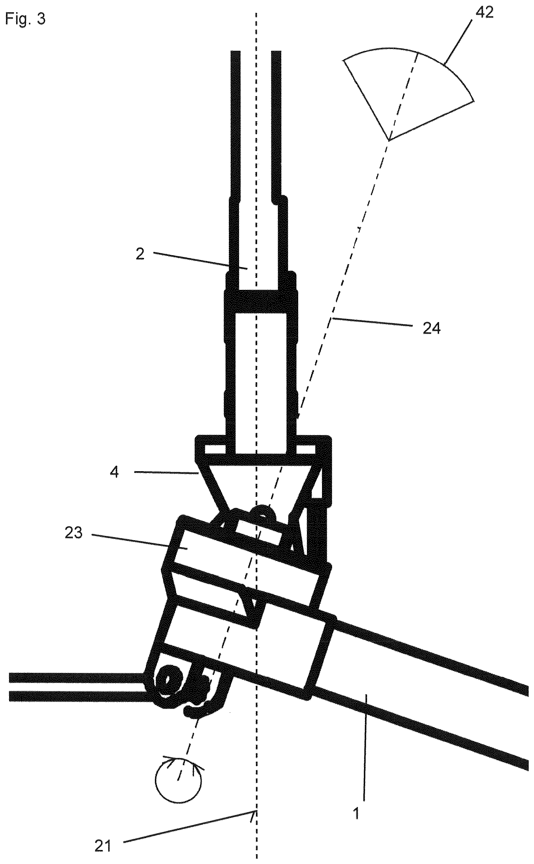

Fig. 3 zeigt ebenfalls eine Detailansicht der Verbindung des ersten Armelements 1 und des zweiten Armelements 2, wobei die Ausrichtung der Armelemente 1, 2 im Vergleich zu Fig. 2 unterschiedlich ist. Das erste Armelement 1 ist geneigt, sodass auch das zweite Drehelement 23, dessen Drehfläche parallel zum ersten Armelement 1 ausgerichtet ist, geneigt ist. Da die zweite Drehachse 24 senkrecht zur Längsachse des ersten Armelements 1 ausgerichtet ist, ist auch die zweite Drehachse 24 geneigt. Das Kippelement 4 ist in der Kippebene 41 verkippt, die in der dargestellten Ansicht in Bildebene liegt, sodass der Kippwinkel 42 dargestellt ist. In der dargestellten Ausrichtung ist der Kippwinkel 42 18° relativ zur zweiten Drehachse 24. Die zweite Neigungsebene 21 ist senkrecht zur Kippebene 41 ausgerichtet, wobei die zweite Neigungsebene 21 von der zweiten Drehachse 24 im Kippwinkel 42 geschnitten wird. Die zweite Neigungsebene 21 steht in der dargestellten Ansicht senkrecht zur Bildebene und ist daher im Schnitt dargestellt. Das zweite Armelement 2 ist daher in der dargestellten Ausführungsform in die Bildebene und aus der Bildebene heraus neigbar.

Aus Fig. 2 und Fig. 3 kann entnommen werden, dass das Kippelement 4 in der dargestellten Ausführungsform zwei parallel zueinander angeordneten Platten umfasst, wobei die Platten auf beiden Seiten der Kippeebene 41 mit jeweils gleichem Abstand und parallel zur Kippebene 41 angeordnet sind. Die Platten verjüngen sich zum ersten Armelement 1 und werden zum zweiten Armelement 2 hin breiter. Die Seitenwände der Platten sind spiegelsymmetrisch zur zweiten Neigungsebene 21 angeordnet. Das Kippelement 4 ist um eine Achse verkippbar, die parallel zum zweiten Drehelement 23, bzw. zur Längsachse des ersten Armelements 1, und in der zweiten Neigungsebene 21 liegt. Zur Einstellung des Kippwinkels 42 ist ein hydraulischer Zylinder vorgesehen, der auf der Kippebene 41, insbesondere parallel zur zweiten Neigungsebene 21, angeordnet ist.

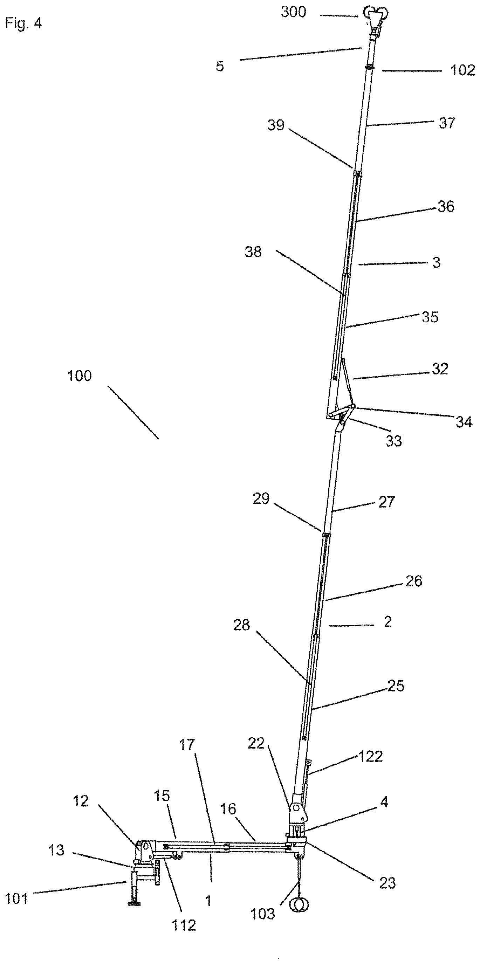

Fig. 4 zeigt einen erfindungsgemäßen Werkzeugarm 100, wobei die Armelemente 1, 2, 3 eine veränderliche Länge aufweisen und in der dargestellten Ausführungsform jeweils vollständig ausgefahren sind. In der dargestellten Ausführungsform erfolgt der Ausschub jeweils über einen Hydraulikzylinder 17,28,29,38,39, in einer alternativen Ausführungsform kann vorgesehen sein, dass der Ausschub über Zahnstangen, Ketten o.ä erfolgt.

In der dargestellten Ausführungsform ist das erste Armelement 1 in einer ersten Neigeeinheit 12 gelagert, die auf dem ersten Drehelement 13 angeordnet ist und der Lagerung des ersten Armelements 1 sowie des ersten Hubzylinders 112 dient. Das erste Armelement 1 weist einen ersten ersten Armteil 15 und einen ersten zweiten Armteil 16 auf, wobei der erste zweite Armteil 16 durch den ersten Ausschubzylinder 17 ausschiebbar ist. In der dargestellten Ausführungsform weist der erste erste Armteil 15 eine Länge von 2,3 m auf und bildet den äußeren Teil des ersten Armelements 1, während der erste zweite Armteil 16 eine Länge von 2 m hat und in den ersten ersten Armteil 15 eingefahren werden kann. Der erste Ausschubzylinder 17 weist in der dargestellten Ausführungsform einen Zylinderhub von 2000 mm auf.

Das zweite Armelement 2 weist einen zweiten ersten Armteil 25, einen zweiten zweiten Armteil 26 und einen zweiten dritten Armteil 27 auf. Der zweite zweite Armteil 26 ist durch den zweiten Ausschubzylinder 28 ausschiebbar. Der zweite dritte Armteil 27 ist durch den dritten Ausschubzylinder 29 ausschiebbar. Das zweite Armelement 2 weist in der dargestellten Ausführungsform eine Länge von ca. 8 m auf. Das zweite Armelement 2 ist als dreiteiliger Teleskoparm ausgebildet, der isoliert aufgebaut ist, wobei das zweite Armelement 2 in der dargestellten Ausführungsform aus einem glasfaserverstärkten Kunststoff ist. Der zweite erste Armteil 25 bildet den äußeren Teil, der den zweiten zweiten Armteil 26 aufnimmt und den zweiten dritten Armteil 27, der den innersten Teil bildet.

In der dargestellten Ausführungsform weist der zweite erste Armteil 25 eine Länge von 3,5 m auf, der zweite zweite Armteil 26 weist eine Länge von 2 m auf, wobei der zweite Ausschubzylinder 28 einen Zylinderhub von 2000 mm aufweist, der zweite dritte Armteil 27 weist ebenfalls eine Länge von 2 m auf und der dritte Ausschubzylinder 29 weist einen Zylinderhub von 2000 mm auf. Am distalen Ende des zweiten dritten Armteils 27 ist das zweite Armelement 2 mit dem dritten Armelement 3 verbunden.

Das dritte Armelement 3 weist eine dritte Neigungsebene 31 auf, in der das dritte Armelement 3 neigbar ist, wobei die Neigung über eine dritte Neigeeinheit einstellbar ist. In der dargestellten Ausführungsform umfasst die dritte Neigeeinheit einen dritten Hubzylinder 32, der an den Gelenkstreben 33 und 34 angreift, um die Bewegung des dritten Armelements 3 zu ermöglichen. Das dritte Armelement 3 ist als dreiteiliger Teleskoparm ausgeführt, der isoliert aufgebaut ist, wobei das dritte Armelement 3 in der dargestellten Ausführungsform aus einem glasfaserverstärkten Kunststoff ist.

Das dritte Armelement 3 weist in der dargestellten Ausführungsform eine Gesamtlänge von 7,5 m auf, wobei ein dritter erster Armteil 35, ein dritter zweiter Armteil 36, sowie ein dritter dritter Armteil 37 vorgesehen sind. Der dritte erste Armteil 35 weist in der dargestellten Ausführungsform eine Länge von 3 m auf und bildet den äußeren Teil des dritten Armelements 3. Der dritte zweite Armteil 36 weist eine Länge von 2 m auf und kann durch den vierten Ausschubzylinder 38 mit einem Zylinderhub von 2000 mm ausgefahren werden. Der dritte dritte Armteil 37 bildet den innersten Teil des Teleskoparms, weist eine Länge von 2 m auf und kann durch den fünften Ausschubzylinder 39 mit einem Zylinderhub von 2000 mm ausgefahren werden. Das distale Ende des dritten dritten Armteils 37 bildet das distale Ende des Werkzeugarms 102. Am distalen Ende des dritten dritten Armteils 37 ist die Verbindung zum Distanzstück 5 hergestellt.

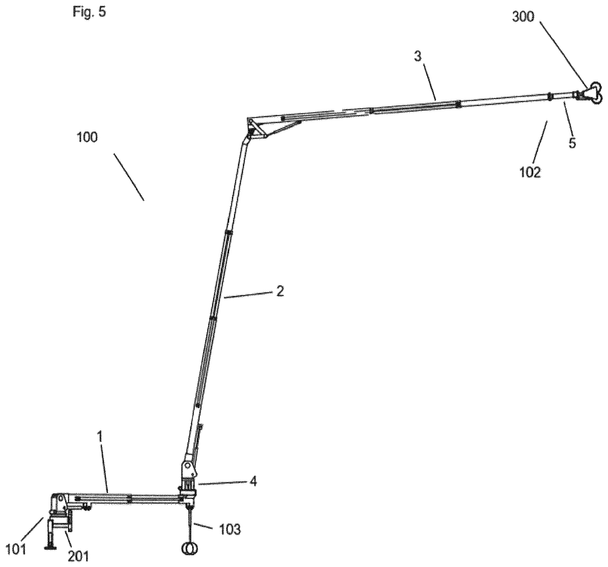

Fig. 5 zeigt den Werkzeugarm 100 mit einer alternativen Ausrichtung der Armelemente 1,2,3, wobei alle Armelemente 1,2,3 auf die volle Länge ausgefahren sind. In der dargestellten Ansicht ist das erste Armelement 1 gedreht und der Werkzeugarm 100 wird seitlich der Basis ausgerichtet, durch Neigung des zweiten Armelements 2 und des dritten Armelements 3 wird das Werkzeug 300 auf die Arbeitshöhe angehoben und positioniert.

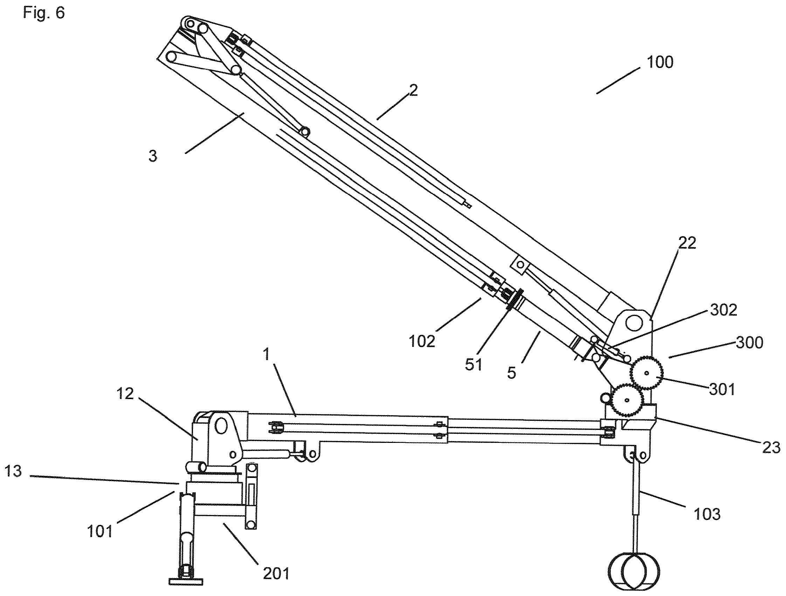

Fig. 6 zeigt den Werkzeugarm 100 teilweise zusammengelegt. In der dargestellten Konfiguration ist das erste Armelement 1 ausgefahren und seitlich zur Basis positioniert. Das zweite und dritte Armelement 2,3 sind eingefahren, wobei das zweite Armelement 2 hochgestellt und das dritte Armelement 3 vollständig eingeklappt ist. Diese Ausrichtung der Armelemente 1,2,3 entspricht einem Zwischenschritt beim Ausklappen bzw. Zusammenlegen zu Beginn und zum Abschluss von Arbeiten mit dem Werkzeugarm 100.

Zu Beginn der Arbeiten wird der Werkzeugarm 100 in die gewünschte Ausrichtung gebracht. Dazu wird in einem ersten Schritt das erste Armelement 1 durch Drehen und Einstellen der gewünschten Neigung positioniert. Üblicherweise wird das erste Armelement 1 dabei parallel zur Bodenfläche angeordnet und über die Greif-Stütz-Füße 103 befestigt. Anschließend werden das zweite und dritte Armelement 2,3 in Position gebracht. Den Anforderungen des jeweiligen Einsatzortes entsprechend kann die Drehung des zweiten Drehelements 23 eingestellt werden, der Kippwinkel 42 des Kippelements 4, sowie die Neigung und die Länge von zweitem und dritten Armelement 2,3. Weiters ist die Ausrichtung des Werkzeugs 300 einstellbar.

Am distalen Ende des Werkzeugarms 102 ist das Distanzstück 5 angeordnet. Das Distanzstück 5 ist über ein drittes Drehelement 51 drehbar mit dem Werkzeugarm 100 verbunden. In der dargestellten Ausführungsform ermöglicht das dritte Drehelement 51 eine Drehung des Distanzstücks 5 um 180°. Es kann in der dargestellten Ausführungsform elektrisch angetrieben werden. In einer alternativen Ausführungsform kann beispielsweise auch ein hydraulischer Antrieb des dritten Drehelements 51 vorgesehen sein. Das Distanzstück 5 weist in der dargestellten Ausführungsform einen Versatz auf, so dass das distale Ende des Distanzstücks 5 nicht in Verlängerung des dritten Armelements 3 angeordnet ist, sondern versetzt dazu. Dadurch kann eine Kollision zwischen Werkzeug 300 und Werkzeugarm 100 verhindert werden. Das Werkzeug 300 ist am distalen Ende des Distanzstücks 5 angeordnet.

In der dargestellten Ausführungsform ist das Werkzeug 300 eine Astsäge, in alternativen Ausführungsformen können auch andere Werkzeuge 300 am Werkzeugarm 100 angebracht werden, beispielsweise Greifer. In der dargestellten Ausführungsform weist die Astsäge zwei Sägeblätter 301 auf, wobei die Sägeblätter jeweils einen Durchmesser von 250 mm haben. Der Antrieb erfolgt in der dargestellten Ausführungsform elektrisch. In einer alternativen Ausführungsform ist auch ein hydraulischer Antrieb möglich. In der dargestellten Ausführungsform ist der Antrieb der Astsäge in ein Gehäuse eingebaut. Die Astsäge kann über eine vierte Neigeeinheit mit einem vierten Hubzylinder 302 geneigt werden, wobei in der dargestellten Ausführungsform ein Neigungswinkel von -45° bis +45° relativ zu einer Verlängerung der Längsachse des dritten Armelements 3 einstellbar ist.

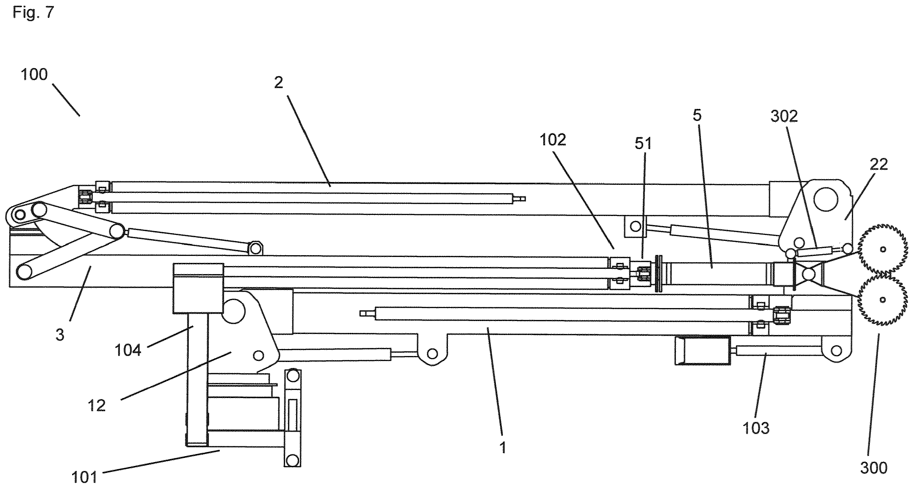

Fig. 7 zeigt den erfindungsgemäßen Werkzeugarm 100 aus Fig. 1 in zusammengelegtem Zustand. Die Armelemente 1, 2, 3 sind jeweils auf ihre kürzeste Länge eingefahren und parallel zueinander angeordnet. Das erste Armelement 1 ist an unterster Position angeordnet, das zweite Armelement 2 an oberster Position, wobei der Höhenversatz zwischen dem ersten Armelement 1 und dem zweiten Armelement 2 auch durch das Kippelement 4 bedingt ist. Das dritte Armelement 3 ist zwischen dem ersten Armelement 1 und dem zweiten Armelement 2 angeordnet, wobei das Werkzeug 300 in der dargestellten Ausführungsform vor dem Kippelement 4 angeordnet ist.

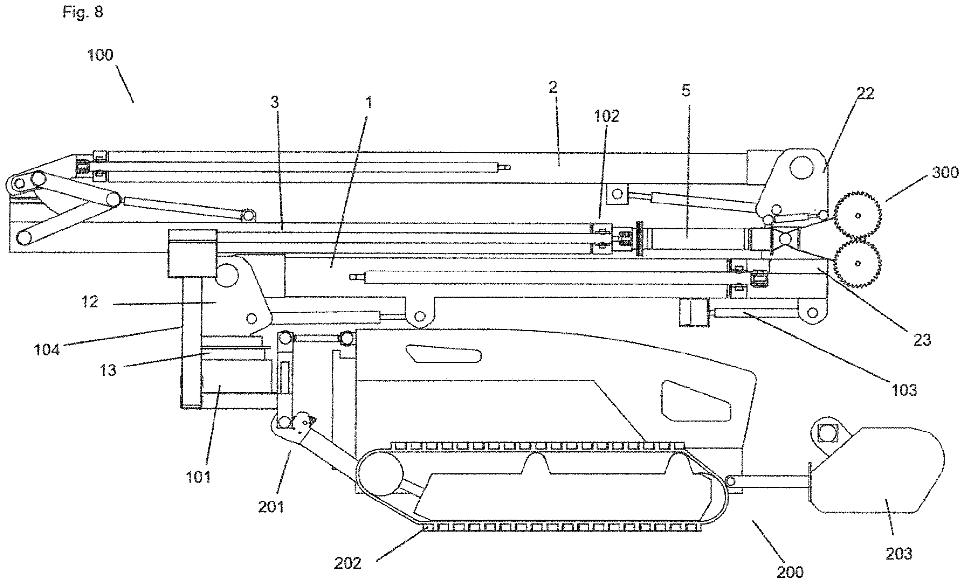

Fig. 8 zeigt den zusammengelegten Werkzeugarm 100, befestigt auf einem Fahrzeug 200 als Basis. Die Verbindung zwischen Werkzeugarm 100 und Fahrzeug 200 ist durch eine Dreipunkthydraulik 201 verwirklicht. Durch die Dreipunkthydraulik 201 ist der Werkzeugarm 100 über drei Punkte am Fahrzeug befestigt. Die Dreipunkthydraulik weist eine Höhenverstellbarkeit auf, so dass der Abstand zum Boden einstellbar ist.

Das Fahrzeug 200 weist in der dargestellten Ausführungsform ein Raupenfahrwerk 202 auf und ist somit ein Raupenfahrzeug, insbesondere eine Mähraupe. In der dargestellten Ausführungsform weist das Fahrzeug 200 als weiteres Werkzeug einen Forstmulcher 203 auf. Dadurch wird ein Freihalten des bodennahen Bereichs von Bewuchs ermöglicht. In einer alternativen Ausführungsform kann auch ein anderer Fahrzeugtyp vorgesehen sein. Es kann in einer alternativen Ausführungsform auch ein anderer Werkzeugaufsatz, wie beispielsweise eine Forstfräse, oder kein weiteres Werkzeug, vorgesehen sein.

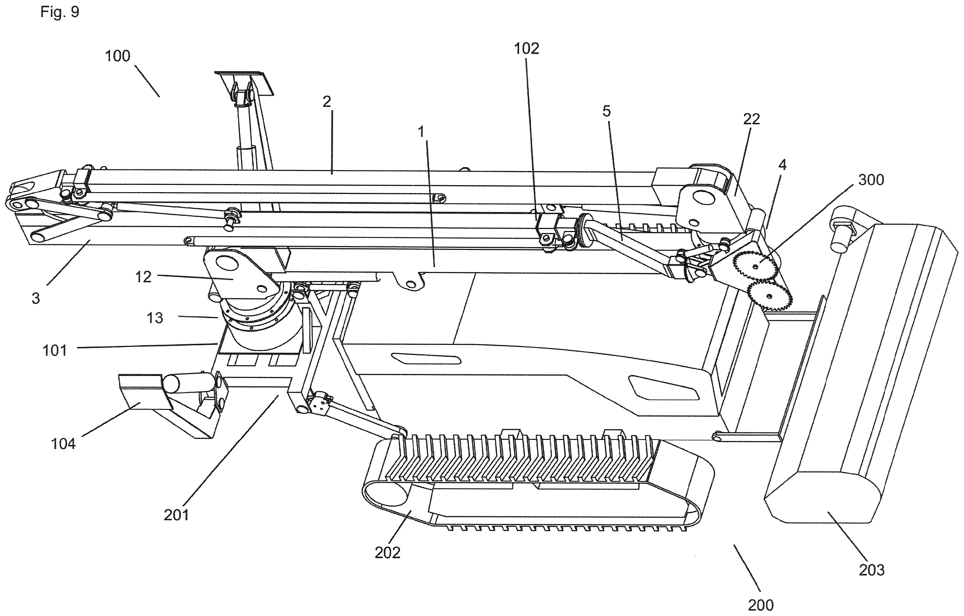

In Fig. 9 ist das Fahrzeug aus Fig. 8 in einer Schrägansicht zu sehen. In Fig. 9 ist deutlich erkennbar, dass das Distanzstück 5 einen Versatz aufweist, sodass eine Kollision zwischen Werkzeug 300 und Werkzeugarm 100 vermieden werden kann. Weiters ist zu erkennen, dass an der Dreipunkthydraulik 201 zwei Stützfüße 104 angeordnet sind, die jeweils einen Stützzylinder aufweisen und hydraulisch bedient werden können. Die zwei Stützfüße 104 ermöglichen eine zusätzliche Stabilisierung des Werkzeugarms 100.

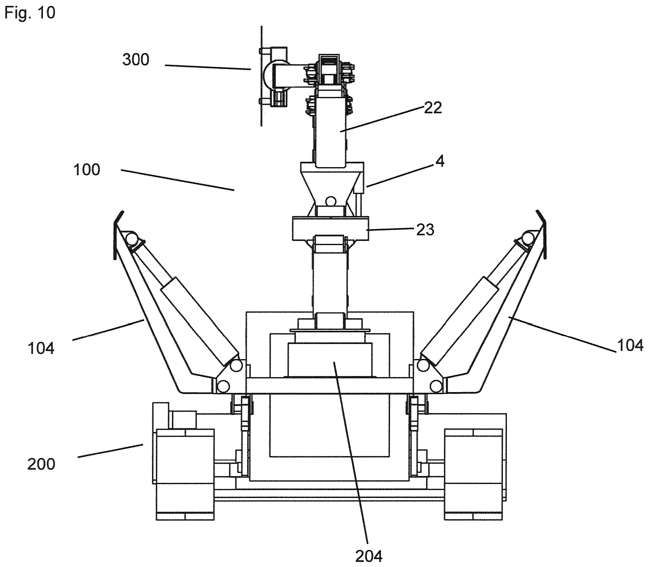

Fig. 10 zeigt das Fahrzeug 200 von hinten. Dabei ist zu erkennen, dass die Stützfüße 104 für den Transport seitlich nach oben geklappt werden können. Weiters ist eine Armaufnahme 204 dargestellt, die eine Kollision des Werkzeugarms 100 mit dem Fahrzeug 200 verhindert, wenn der Werkzeugarm 100 über das Fahrzeug 200 geschwenkt wird.

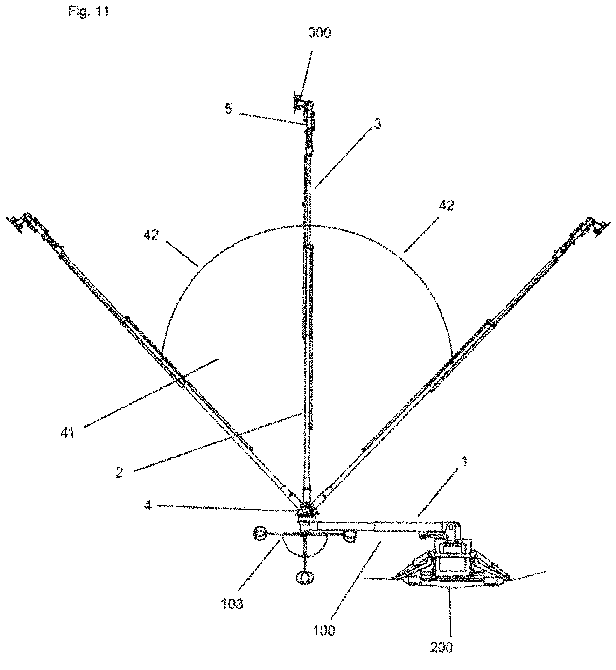

Fig. 11 zeigt den Werkzeugarm 100 in ausgefahrenem Zustand auf einem Fahrzeug 200. Durch das erste Drehelement 13 wird der Werkzeugarm 100 aus der Position über dem Fahrzeug 200 seitlich ausgestellt und durch die Greif-Stütz-Füße 103 abgestützt. Die verschiedenen Positionen des Werkzeugarms 100, die durch Verkippen in der Kippebene 41 erzielt werden können, sind schematisch dargestellt. Die Kippebene 41 liegt in Fig. 11 in der Bildebene. In der dargestellten Ausführungsform ist ein Verkippen um einen Kippwinkel 42 von -45° bis +45° zur zweiten Drehachse 24 möglich.

Auch die Position der Greif-Stütz-Füße 103 ist in verschiedenen Winkeln einstellbar, so dass der Werkzeugarm 100 gegen den Boden abgestützt werden kann, oder an einem Baum 400 angreifen kann.

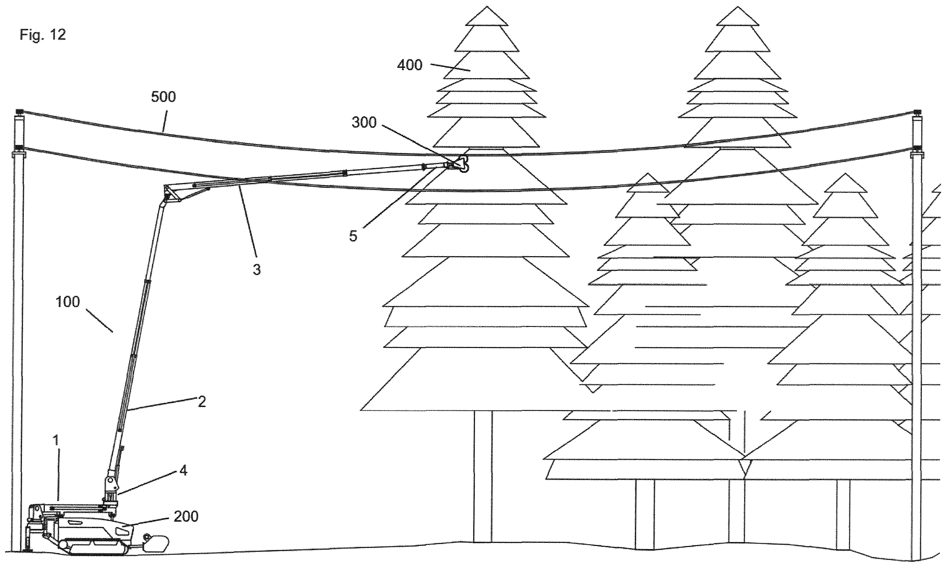

Fig. 12 zeigt einen Werkzeugarm 100 auf einem Fahrzeug 200 im Einsatz. Dabei wird der Werkzeugarm 100 in Verbindung mit einer Astsäge als Werkzeug 300 eingesetzt um den Zuschnitt von Bäumen 400 entlang einer Freileitungstrasse 500 durchzuführen. Das erste Armelement 1 ist parallel zur Bodenfläche im Wesentlichen waagrecht ausgerichtet. Das zweite Armelement 2 ist hochgestellt, das dritte Armelement 3 ist flach ausgerichtet. Die zweite Neigungsebene 21 und die dritte Neigungsebene 31 stimmen miteinander überein und liegen in der Ansicht in Bildebene. Sie sind senkrecht zur Kippebene 41 des Kippelements 4 ausgerichtet. In der Ansicht ist die Kippebene 41 daher senkrecht zur Bildebene ausgerichtet, sodass das Kippelement in die Bildebene hinein und aus der Bildebene heraus verkippbar ist.

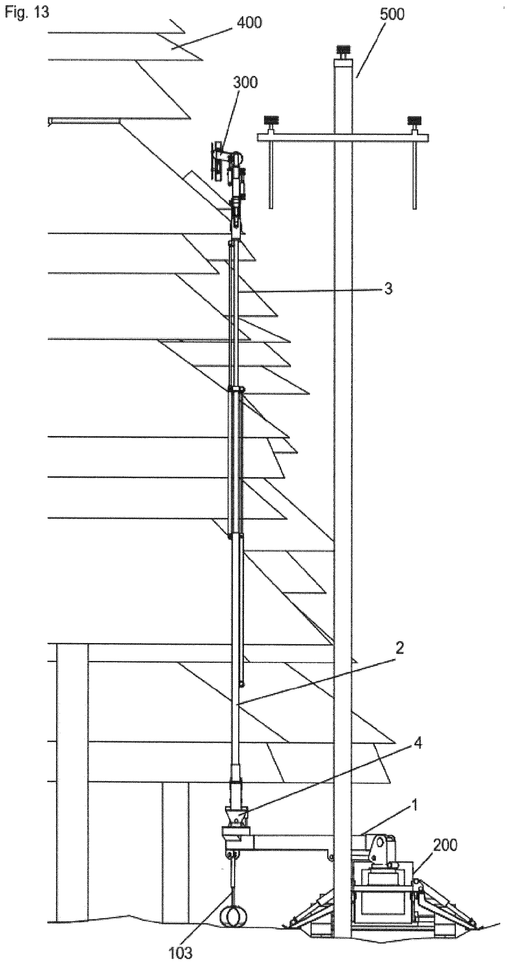

In Fig. 13 ist die Anordnung aus Fig. 12 zu sehen, wobei das Fahrzeug 200 von hinten dargestellt ist. In dieser Darstellung liegt die Kippebene 41 in Bildebene. Das Kippelement 4 ist nicht verkippt. Die zweite Neigungsebene 21 und die dritte Neigungsebene 31 sind senkrecht zur Kippebene 41 und daher auch senkrecht zur Bildebene ausgerichtet. Da in der Darstellung das Kippelement 4 nicht verkippt ist, der Kippwinkel 42 also 0° beträgt, liegt die zweite Drehachse 24 in der Kippebene 41 und in der zweiten Neigungsebene 21.

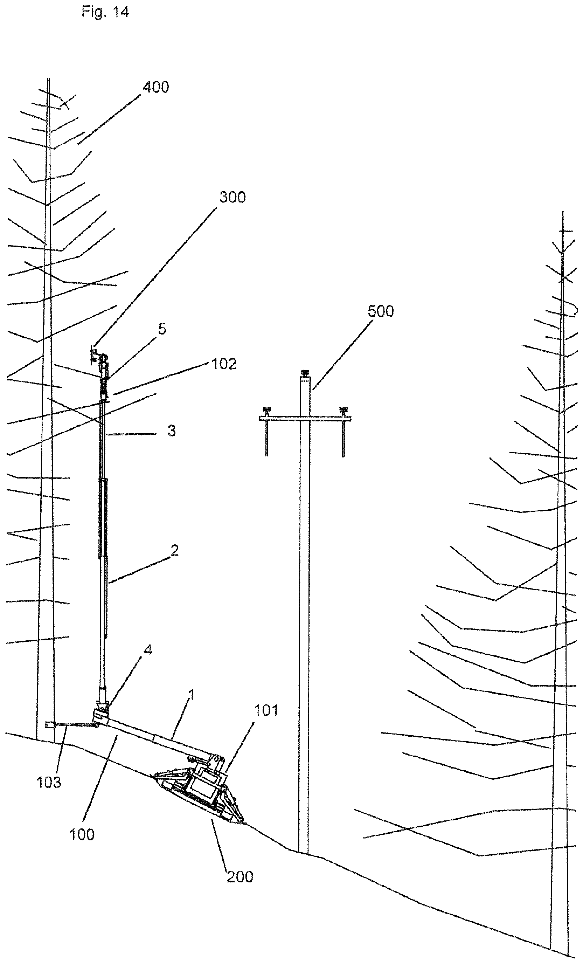

Fig. 14 zeigt eine alternative Anordnung des Fahrzeugs 200 und des Werkzeugarms 100 im Einsatz, wobei das Gelände eine Hangneigung aufweist. Das erste Armelement 1 ist daher in Fig. 14 mit einer Neigung zur ersten Drehachse 14 ausgerichtet, um so die Hangneigung teilweise auszugleichen und eine Anordnung des ersten Armelements 1 möglichst parallel zur Bodenfläche zu ermöglichen. Der Greif-Stütz-Fuß 103 sind an einem Baum 400 fixiert.

Das Kippelement 4 weist in Fig. 14 eine Kippebene 41 auf, die in Bildebene liegt, wobei in der dargestellten Ausführungsform ein Kippwinkel 42 von 18° vorliegt. Dadurch kann die Hangneigung ausgeglichen werden und der Einsatz des Werkzeugarms 100 für Arbeiten in dieser schwer zugänglichen Position wird ermöglicht. Die zweite Neigungsebene 21 ist somit lotrecht und daher parallel zu den Stämmen der Bäume 400 ausgerichtet, wodurch die exakte Steuerung des Werkzeugs 300 erleichtert ist. Der dargestellte Werkzeugarm 100 weist somit viele Freiheitsgrade auf und ermöglicht einen flexiblen Einsatz, insbesondere auch in schwer zugänglichem Gelände.

## Patentansprüche

1. Werkzeugarm (100) für Arbeiten in schwer zugänglichen Positionen, wobei der Werkzeugarm (100) ein proximales Ende (101) aufweist, mit dem der Werkzeugarm (100) auf einer Basis befestigbar ist, und ein distales Ende (102) aufweist, das mit einem Werkzeug (300) verbindbar ist, wobei der Werkzeugarm (100) umfasst:
- ein proximales erstes Armelement (1), das um eine erste Drehachse (14) drehbar auf einem ersten Drehelement (13) gelagert ist, und das in einer ersten Neigungsebene (11), insbesondere nach oben und unten, neigbar ist, wobei die erste Drehachse (14) in der ersten Neigungsebene (11) liegt, und
- ein, an das erste Armelement (1) anschließendes, zweites Armelement (2), das um eine zweite Drehachse (24) drehbar gelagert ist, und das in einer zweiten Neigungsebene (21) neigbar ist,
**dadurch gekennzeichnet, dass** zwischen dem ersten Armelement (1) und dem zweiten Armelement (2) ein Kippelement (4) vorgesehen ist, wobei das Kippelement (4) in einer Kippebene (41) verkippbar ist, wobei die zweite Drehachse (24) in der Kippebene (41) liegt und wobei die zweite Neigungsebene (21) senkrecht zur Kippebene (41) angeordnet ist.

2. Werkzeugarm (100) nach Anspruch 1, **dadurch gekennzeichnet, dass** die zweite Drehachse (24) in einem Winkel, insbesondere senkrecht, zur Längserstreckung des ersten Armelements (1) ausgerichtet ist.

3. Werkzeugarm (100) nach Anspruch 1 oder 2, **dadurch gekennzeichnet, dass** das proximale Ende des zweiten Armelements (2) von dem ersten Armelement (1), und/oder einer Verlängerung der Längsachse des ersten Armelements (1), beabstandet ist und/oder dass das proximale Ende des zweiten Armelements (2) versetzt zur Längserstreckung oder einer Verlängerung der Längserstreckung des ersten Armelements (1) angeordnet ist.

4. Werkzeugarm (100) nach einem der Ansprüche 1 bis 3, **dadurch gekennzeichnet, dass** am distalen Ende des ersten Armelements (1) ein zweites Drehelement (23) angeordnet ist, das die zweite Drehachse (24) aufweist, wobei das Kippelement (4) auf dem zweiten Drehelement (23) angeordnet ist.

5. Werkzeugarm (100) nach einem der Ansprüche 1 bis 4, **dadurch gekennzeichnet, dass** das erste Armelement (1) durch eine erste Neigeeinheit (12), insbesondere umfassend einen ersten Hubzylinder (112), neigbar ist und/oder dass das zweite Armelement (2) durch eine zweite Neigeeinheit (22), insbesondere umfassend einen zweiten Hubzylinder (122), neigbar ist, wobei die zweite Neigeeinheit (22) insbesondere auf dem Kippelement (4) angeordnet ist.

6. Werkzeugarm (100) nach einem der Ansprüche 1 bis 5, wobei auf dem zweiten Drehelement (23) das Kippelement (4) und auf dem Kippelement (4) die zweite Neigeeinheit (22) angeordnet ist.

7. Werkzeugarm (100) nach einem der Ansprüche 1 bis 6, **dadurch gekennzeichnet, dass** das Kippelement (4) relativ zur zweiten Drehachse (24) um einen Kippwinkel (42) verkippbar ist, wobei die zweite Neigungsebene (21) von der zweiten Drehachse (24) im Kippwinkel (42) geschnitten wird, und wobei insbesondere vorgesehen ist, dass der Kippwinkel (42) zwischen -45° und +45° einstellbar ist.

8. Werkzeugarm (100) nach einem der Ansprüche 1 bis 7, **dadurch gekennzeichnet, dass** mindestens ein Greif-Stütz-Fuß (103) am ersten Armelement (1) vorgesehen ist, insbesondere am distalen Ende des ersten Armelements (1).

9. Werkzeugarm (100) nach einem der Ansprüche 1 bis 8, **dadurch gekennzeichnet, dass** der Werkzeugarm (100) ein, insbesondere distales, drittes Armelement (3) umfasst, wobei das dritte Armelement (3) durch eine dritte Neigeeinheit in einer dritten Neigungsebene (31) neigbar ist, wobei die dritte Neigungsebene (31) insbesondere mit der zweiten Neigungsebene (21) übereinstimmt.

10. Werkzeugarm (100) nach einem der Ansprüche 1 bis 9, **dadurch gekennzeichnet, dass** das erste Armelement (1) und/oder das zweite Armelement (2) und/oder das dritte Armelement (3) in der Länge veränderlich ist und/oder,
dass das erste Armelement (1) und/oder das zweite Armelement (2) und/oder das dritte Armelement (3) als, insbesondere isolierter, Teleskoparm ausgeführt ist.

11. Werkzeugarm (100) nach einem der Ansprüche 1 bis 10, **dadurch gekennzeichnet, dass** der Werkzeugarm (100) zusammenlegbar ist, wobei das erste Armelement (1) und/oder das zweite Armelement (2) und/oder das dritte Armelement (3) in einer zusammengelegten Konfiguration parallel zueinander, insbesondere senkrecht zur ersten Drehachse (14) und/oder senkrecht zur zweiten Drehachse (24), anordenbar sind, wobei insbesondere vorgesehen ist, dass das dritte Armelement (3) zwischen dem ersten Armelement (1) und dem zweiten Armelement (2) anordenbar ist.

12. Werkzeugarm (100) nach einem der Ansprüche 1 bis 11, **dadurch gekennzeichnet, dass** das Werkzeug (300) über ein Distanzstück (5) mit dem distalen Ende (102) des Werkzeugsarms (100) verbindbar ist, wobei das Distanzstück (5) einen Versatz aufweist und/oder, insbesondere über ein drittes Drehelement (51), drehbar mit dem Werkzeugarm (100) verbindbar ist.

13. Werkzeugarm (100) nach einem der Ansprüche 1 bis 12 mit einem Werkzeug (300), wobei insbesondere vorgesehen ist, dass das Werkzeug (300) durch eine vierte Neigeeinheit neigbar ist, insbesondere mit einem Neigungswinkel von -45° bis +45° relativ zu einer Verlängerung der Längsachse des benachbarten Armelements (3) und/oder, dass insbesondere vorgesehen ist, dass das Werkzeug (300) eine Astsäge ist.

14. Fahrzeug (200) mit einem Werkzeugarm (100) nach einem der Ansprüche 1 bis 13, wobei das Fahrzeug (200) insbesondere ein Raupenfahrzeug ist.

15. Fahrzeug (200) nach Anspruch 14, wobei der Werkzeugarm (100) über eine Dreipunkthydraulik (201) am Fahrzeug (200) befestigbar ist, wobei insbesondere vorgesehen ist, dass an der Dreipunkthydraulik (201) zumindest ein Stützfuß (104) angeordnet ist.

## Claims

1. Tool arm (100) for work in poorly accessible positions, the tool arm (100) having a proximal end (101) by means of which the tool arm (100) can be fastened to a base, and a distal end (102) which can be connected to a tool (300), the tool arm (100) comprising:
- a proximal first arm element (1), which is rotatably mounted about a first axis of rotation (14) on a first rotary element (13), and which can be inclined in a first inclination plane (11), in particular upwards and downwards, the first axis of rotation (14) lying in the first inclination plane (11), and
- a second arm element (2) which adjoins the first arm element (1), is mounted rotatably about a second axis of rotation (24) and can be inclined in a second inclination plane (21),
**characterised in that** a tilting element (4) is provided between the first arm element (1) and the second arm element (2), wherein the tilting element (4) can be tilted in a tilting plane (41), wherein the second axis of rotation (24) lies in the tilting plane (41) and wherein the second inclination plane (21) is arranged perpendicular to the tilting plane (41).

2. Tool arm (100) according to claim 1, **characterised in that** the second axis of rotation (24) is aligned at an angle, in particular perpendicularly, to the longitudinal extent of the first arm element (1).

3. Tool arm (100) according to claim 1 or 2, **characterised in that** the proximal end of the second arm element (2) is spaced apart from the first arm element (1) and/or an extension of the longitudinal axis of the first arm element (1), and/or **in that** the proximal end of the second arm element (2) is arranged offset from the longitudinal extent or an extension of the longitudinal extent of the first arm element (1).

4. Tool arm (100) according to any one of claims 1 to 3, **characterised in that** a second rotary element (23) is arranged at the distal end of the first arm element (1) and has the second axis of rotation (24), the tilting element (4) being arranged on the second rotary element (23).

5. Tool arm (100) according to any one of claims 1 to 4, **characterised in that** the first arm element (1) can be inclined by a first inclining unit (12), in particular comprising a first lifting cylinder (112), and/or **in that** the second arm element (2) can be inclined by a second inclining unit (22), in particular comprising a second lifting cylinder (122), the second inclining unit (22) being arranged in particular on the tilting element (4).

6. Tool arm (100) according to any one of claims 1 to 5, wherein the tilting element (4) is arranged on the second rotating element (23) and the second inclining unit (22) is arranged on the tilting element (4).

7. Tool arm (100) according to any one of claims 1 to 6, **characterised in that** the tilting element (4) can be tilted relative to the second axis of rotation (24) by a tilting angle (42), the second inclination plane (21) being intersected by the second axis of rotation (24) at the tilting angle (42), and it being provided in particular that the tilting angle (42) can be set between -45° and +45°.

8. Tool arm (100) according to any one of claims 1 to 7, **characterised in that** at least one gripping-and-supporting foot (103) is provided on the first arm element (1), in particular at the distal end of the first arm element (1).

9. Tool arm (100) according to any one of the claims 1 to 8, **characterised in that** the tool arm (100) comprises a, in particular distal, third arm element (3), wherein the third arm element (3) can be inclined in a third inclination plane (31) by a third inclination unit, wherein the third inclination plane (31) is in particular coincident with the second inclination plane (21).

10. Tool arm (100) according to any one of the claims 1 to 9, **characterised in that** the first arm element (1) and/or the second arm element (2) and/or the third arm element (3) is variable in length and/or,
**in that** the first arm element (1) and/or the second arm element (2) and/or the third arm element (3) is configured as a, in particular insulated, telescopic arm.

11. Tool arm (100) according to any one of claims 1 to 10, **characterised in that** the tool arm (100) can be folded, wherein the first arm element (1) and/or the second arm element (2) and/or the third arm element (3) can be arranged in a folded configuration parallel to one another, in particular perpendicular to the first axis of rotation (14) and/or perpendicular to the second axis of rotation (24), it being provided in particular that the third arm element (3) can be arranged between the first arm element (1) and the second arm element (2).

12. Tool arm (100) according to any one of claims 1 to 11, **characterised in that** the tool (300) can be connected to the distal end (102) of the tool arm (100) via a spacer (5), the spacer (5) having an offset and/or being rotatably connectable to the tool arm (100), in particular via a third rotary element (51).

13. Tool arm (100) according to any one of claims 1 to 12 with a tool (300), wherein in particular it is provided that the tool (300) is tiltable by a fourth inclination unit, in particular with an angle of inclination of -45° to +45° relative to an extension of the longitudinal axis of the adjacent arm element (3) and/or, in that in particular it is provided that the tool (300) is a branch saw.

14. Vehicle (200) comprising a tool arm (100) according to any one of claims 1 to 13, the vehicle (200) being in particular a tracked vehicle.

15. Vehicle (200) according to claim 14, wherein the tool arm (100) can be attached to the vehicle (200) via a three-point hydraulic system (201), wherein it is provided in particular that at least one support foot (104) is arranged on the three-point hydraulic system (201).

## Revendications

1. Bras d'outil (100) destiné au travail dans des positions difficiles d'accès, dans lequel le bras d'outil (100) présente une extrémité proximale (101), à laquelle le bras d'outil (100) peut être fixé sur une base, et présente une extrémité distale (102), qui peut être reliée à un outil (300), dans lequel le bras d'outil (100) comprend :
- un premier élément de bras (1) proximal, qui est monté de manière rotative autour d'un premier axe de rotation (14) sur un premier élément rotatif (13), et qui peut être incliné dans un premier plan d'inclinaison (11), en particulier de haut en bas, dans lequel le premier axe de rotation (14) se situe dans le premier plan d'inclinaison (11), et
- un deuxième élément de bras (2) se raccordant au premier élément de bras (1), qui est monté de manière rotative autour d'un second axe de rotation (24), et qui peut être incliné dans un deuxième plan d'inclinaison (21),
**caractérisé en ce qu'**un élément basculant (4) est prévu entre le premier élément de bras (1) et le deuxième élément de bras (2), dans lequel l'élément basculant (4) peut basculer dans un plan de basculement (41), dans lequel le second axe de rotation (24) se situe dans le plan de basculement (41) et dans lequel le deuxième plan d'inclinaison (21) est disposé perpendiculairement au plan de basculement (41).

2. Bras d'outil (100) selon la revendication 1, **caractérisé en ce que** le second axe de rotation (24) est orienté selon un angle, en particulier perpendiculairement à l'extension longitudinale du premier élément de bras (1).

3. Bras d'outil (100) selon la revendication 1 ou 2, **caractérisé en ce que** l'extrémité proximale du deuxième élément de bras (2) est espacée du premier élément de bras (1) et/ou d'un prolongement de l'axe longitudinal du premier élément de bras (1), et/ou **en ce que** l'extrémité proximale du deuxième élément de bras (2) est disposé de manière décalée par rapport à l'extension longitudinale ou à un prolongement de l'extension longitudinale du premier élément de bras (1).

4. Bras d'outil (100) selon l'une quelconque des revendications 1 à 3, **caractérisé en ce qu'**un second élément rotatif (23) est disposé au niveau de l'extrémité distale du premier élément de bras (1), qui présente le second axe de rotation (24), dans lequel l'élément basculant (4) est disposé sur le second élément rotatif (23).

5. Bras d'outil (100) selon l'une quelconque des revendications 1 à 4, **caractérisé en ce que** le premier élément de bras (1) peut être incliné par l'intermédiaire d'une première unité d'inclinaison (12), en particulier comprenant un premier cylindre de levage (112) et/ou **en ce que** le deuxième élément de bras (2) peut être incliné par l'intermédiaire d'une deuxième unité d'inclinaison (22), en particulier comprenant un second cylindre de levage (122), dans lequel la deuxième unité d'inclinaison (22) est disposée en particulier sur l'élément basculant (4).

6. Bras d'outil (100) selon l'une quelconque des revendications 1 à 5, dans lequel l'élément basculant (4) est disposé sur le second élément rotatif (23) et la deuxième unité d'inclinaison (22) sur l'élément basculant (4).

7. Bras d'outil (100) selon l'une quelconque des revendications 1 à 6, **caractérisé en ce que** l'élément basculant (4) peut basculer par rapport au second axe de rotation (24) autour d'un angle de basculement (42), dans lequel le deuxième plan d'inclinaison (21) du second axe de rotation (24) est coupé selon l'angle de basculement (42), et dans lequel est prévu en particulier que l'angle de basculement (42) peut être réglé entre -45° et +45°.

8. Bras d'outil (100) selon l'une quelconque des revendications 1 à 7, **caractérisé en ce qu'**au moins un pied de support - préhension (103) est prévu au niveau du premier élément de bras (1), en particulier au niveau de l'extrémité distale du premier élément de bras (1).

9. Bras d'outil (100) selon l'une quelconque des revendications 1 à 8, **caractérisé en ce que** le bras d'outil (100) comprend un troisième élément de bras (3), en particulier distal, dans lequel le troisième élément de bras (3) peut être incliné par l'intermédiaire d'une troisième unité d'inclinaison dans un troisième plan d'inclinaison (31), dans lequel le troisième plan d'inclinaison (31) correspond en particulier au deuxième plan d'inclinaison (21).

10. Bras d'outil (100) selon l'une quelconque des revendications 1 à 9, **caractérisé en ce que** le premier élément de bras (1) et/ou le deuxième élément de bras (2) et/ou le troisième élément de bras (3) est modifiable en longueur et/ou,
**en ce que** le premier élément de bras (1) et/ou le deuxième élément de bras (2) et/ou le troisième élément de bras (3) sont réalisés en tant que bras téléscopique, en particulier isolé.

11. Bras d'outil (100) selon l'une quelconque des revendications 1 à 10, **caractérisé en ce que** le bras d'outil (100) peut se replier, dans lequel le premier élément de bras (1) et/ou le deuxième élément de bras (2) et/ou le troisième élément de bras (3) peuvent être disposés selon une configuration fusionnée parallèlement les uns aux autres, en particulier perpendiculairement au premier axe de rotation (14) et/ou perpendiculairement au second axe de rotation (24), dans lequel est prévu en particulier que le troisième élément de bras (3) peut être disposé entre le premier élément de bras (1) et le deuxième élément de bras (2).

12. Bras d'outil (100) selon l'une quelconque des revendications 1 à 11, **caractérisé en ce que** l'outil (300) peut être relié par une pièce d'espacement (5) à l'extrémité distale (102) du bras d'outil (100), dans lequel la pièce d'espacement (5) présente un décalage et/ou, en particulier par un troisième élément rotatif (51), peut être relié de manière rotative avec le bras d'outil (100).

13. Bras d'outil (100) selon l'une quelconque des revendications 1 à 12 comprenant un outil (300), dans lequel est prévu en particulier que l'outil (300) peut être inclinée par l'intermédiaire d'une quatrième unité d'inclinaison, en particulier avec un angle d'inclinaison allant de -45 ° à +45 ° par rapport à un prolongement de l'axe longitudinal de l'élément de bras (3) adjacent et/ou, en ce qu'est prévu en particulier, que l'outil (300) est une scie d'élagage.

14. Véhicule (200) comprenant un bras d'outil (100) selon l'une quelconque des revendications 1 à 13, dans lequel le véhicule (200) est en particulier un véhicule à chenilles.

15. Véhicule (200) selon la revendication 14, dans lequel le bras d'outil (100) peut être fixé par un système hydraulique à trois points (201) au niveau du véhicule (200), dans lequel est prévu en particulier qu'au moins un pied de support (104) est disposé au niveau du système hydraulique à trois points (201).
